# EUROPEAN PATENT SPECIFICATION

(11) **EP 2 031 799 B1**
(45) Date of publication and mention of the grant of the patent: **02.12.2009**
(21) Application number: 07425539.9
(22) Date of filing: 29.08.2007
(51) Int. Cl.: H04L 12/24

(54) **Method of allocating resources for performing a management operation in a telecommunication network**
Verfahren zur Zuweisung von Ressourcen zur Ausführung eines Verwaltungsvorgangs in einem Telekommunikationsnetz
Procédé d'attribution de ressources pour effectuer une opération de gestion dans un réseau de télécommunication

(43) Date of publication of application: 04.03.2009
(73) Proprietor: Alcatel Lucent, 75008 Paris (FR)
(72) Inventor: Paparella, Andrea, 21052 Busto Arsizo (Varese) (IT); Riglietti, Roberto, 20059 Vimercate (Milano) (IT); Donadio, Pasquale, 80129 Napoli (IT)
(74) Representative: Schmidt, Werner Karl

(56) References cited:
- EP-A- 1 376 931
- WO-A-2006/045337
- US-A1- 2002 181 462
- US-A1- 2004 268 406
- US-A1- 2006 015 505
- PAZEL D P ET AL: "Neptune: A Dynamic Resource Allocation and Planning System for a Cluster Computing Utility" CLUSTER COMPUTING AND THE GRID 2ND IEEE/ACM INTERNATIONAL SYMPOSIUM CCGRID2002 BERLIN, GERMANY 21-24 MAY 2002, PISCATAWAY, NJ, USA,IEEE COMPUT. SOC, US, 21 May 2002 (2002-05-21), pages 57-57, XP010853413 ISBN: 0-7695-1582-7

## Description

### Field of the invention

The present invention relates to the field of telecommunication networks. More particularly, the present invention relates to a method of allocating resources for performing a management operation in a telecommunication network, and a telecommunication system configured for implementing such a method.

### Background art

As it is known, the management of a telecommunication network provides performing a set of operations (which will be termed herein after "management operations"), such as for instance:
- monitoring of network performances;
- configuration of network elements and their resources (boards, ports, cross-connections, etc.);
- updating the software applications installed on the network elements; and
- managing the errors occurring in the network.

Typically, the management operations are performed by an apparatus, which is termed "network management apparatus" or, briefly, NMS. The NMS is typically connected to one of the network elements (which is termed "gateway") by means of a physical or logical connection and is configured to communicate with each network element of the telecommunication network through the gateway. To this purpose, the NMS has an application termed "manager", whereas the network elements have respective applications termed "agents". Typically, the manager and the agents communicate one another by means of a management protocol, according to a client-server type scheme. Further, the NMS typically has a user interface (usually a graphic interface) allowing an operator responsible of managing the network to visualize the network elements status, to command the execution of the management operations and to visualize the results of the operations themselves.

When an operator responsible of managing the network wishes to perform a management operation upon various network elements (for instance, distributing a new version of a software to a few network elements, or collecting the counters for monitoring the performances of a few network elements, etc.), he connects through the NMS to each of the network elements upon which the operation has to be performed and, after being connected to a given network element, he launches the execution of the management operation.

Typically, each network element has then to allocate a part of its resources for supporting the execution of the management operation requested by the operator through the NMS.

These resources may be allocated in a fixed amount and in permanent way at the network element, independently of the actual amount of resources required for supporting the execution of the management operations actually requested by the operator through the NMS.

WO 2006/045337 discloses a method and system for managing resources in the telecommunications services and networks. The method and system regard execution of processes by distributed agents on processing machines to perform predetermined tasks on the network, and are characterized by: setting target data including goals on processes and constraints on resource utilization to be met by the system; monitoring computational resources utilization and processes execution by agents, and collecting performance data representative of resource utilization and process execution; comparing the collected performance data with the set data, a penalty being established when performance data do not fulfill target data; and re-allocating resources for process execution by agents so as to minimize the penalty determined on the basis of said comparison.

### Summary of the invention

Disadvantageously, the solution of allocating the resources in a fixed amount and in a permanent way at the network element implies a waste of resources, since the resources are allocated for supporting management operations even when such operations are not performed.

The Applicant has noticed that, alternatively, an operation of "supervision" of the network elements may be performed, i.e.: when the operator responsible of managing the network wishes to perform a given management operation upon a number of network elements, he connects through the NMS to each of the network elements upon which the operation has to be performed, and requests to allocate the resources required to support the execution of the management operation. In other words, in each network element, the resources are dynamically allocated according to the specific management operation that the operator requests to perform by means of the NMS.

However, the Applicant has noticed that also the supervision operation has some drawbacks.

First of all, for executing the supervision of the network elements upon which the management operation has to be performed, the operator has to know which ones such network elements are. Disadvantageously, the operator can not find this information by means of the NMS. Indeed, the NMS is able to present the operator with information concerning the single network elements, and not with information concerning the network as a whole (i.e. the number of network elements, the type of network elements, the topology according to which they are arranged, etc.). The operator must then know a priori this information.

Further, disadvantageously, in case the supervision operation has to be performed upon a very high number of network elements, the NMS ha to keep active the connection between its manager and a very high number of agents. This disadvantageously implies a very high resource consumption at the NMS and in the telecommunication network.

Further, disadvantageously, since all the connections between the manager and the agents of the network elements upon which the supervision operation has to be performed pass through the gateway, if the number of connections is very high a congestion of the gateway may arise, which delays or even blocks the information exchange between manager and agents.

Accordingly, the Applicant has faced the problem of providing a method for allocating resources for performing a management operation in a telecommunication network, which overcomes at least one of the above mentioned drawbacks.

In particular, the Applicant has tackled the problem of providing a method of allocating resources for performing a management operation in a telecommunication network, which allows to automatically identify the network elements upon which a given management operation has to be performed, and/or which requires allocation of a lower amount of resources at the NMS and in the telecommunication network, and/or which minimizes the risk of a gateway congestion.

According to a first aspect, the present invention provides a method of allocating resources for performing a management operation upon network elements of a telecommunication network, comprising the following steps:
a) sending a resource allocation request to a first network element of the telecommunication network;
b) at the first network element, calculating a first logical structure comprising a plurality of network elements of the telecommunication network, the plurality of network elements comprising the first network element;
c) distributing the allocation request from the first network elements to the remaining network elements of the plurality of network elements according to the first logical structure; and
d) in at least one of the remaining network elements of the plurality of network elements, determining whether to allocate resources according to the content of the allocation request.

Preferably, the method also comprises the following steps:
e) in at least one of the remaining network elements, transmitting to the first network element an allocation answer message indicating whether the at least one of the remaining network elements has allocated the resources;
f) at the first network element, determining wether the at least one of the remaining network elements has allocated the resources according to the allocation answer message; and
g) in the affirmative, at the first network element, calculating a second logical structure including the at least one of the remaining network elements.

Preferably, step a) comprises a step of sending a requirements in the resource allocation request, and step d) comprises a step of determining whether the at least one of the plurality of network elements fulfils the requirement and, in the affirmative, determining to allocate the resources.

Preferably, step a) comprises a step of sending, in the resource allocation request, an information indicative of a type and an amount of resources that the at least one of the plurality of network elements has to allocate, if during step d) the at least one of the plurality of network elements determines to allocate the resources.

Preferably, step a) comprises a step of sending, in the resource allocation request, an information indicative of a criterion according to which the first logical structure has to be calculated, and step b) comprises a step of calculating the first logical structure according to this criterion.

According to a second aspect, the present invention provides a telecommunication system comprising a plurality of network elements and a management terminal cooperating with a first network element of the plurality of network elements, wherein:
- the management terminal is configured to send to the first network element an allocation request for requesting allocation of resources for performing a management operation;
- the first network element is configured to calculate a first logical structure comprising a plurality of network elements, and to distribute the allocation request to remaining network elements of the plurality of network elements according to the first logical structure; and
- at least one of the remaining network elements of the plurality of network elements is configured to determine whether to allocate the resources according to the content of the resource allocation request.

### Brief description of the drawings

The present invention will become clearer from the following detailed description, given by way of example and not of limitation, to be read by referring to the accompanying drawings, wherein:
- Figure 1 schematically shows a first step of the operation of allocating resources according to an embodiment of the present invention, applied to an exemplary telecommunication network;
- Figure 2 schematically shows a second step of the operation of allocating resources according to an embodiment of the present invention, applied to the telecommunication network of Figure 1;
- Figure 3 schematically shows a first step of the operation of releasing the resources according to an embodiment of the present invention, applied to the telecommunication network of Figure 1; and
- Figure 4 schematically shows a second step of the operation of releasing the resources according to an embodiment of the present invention, applied to the telecommunication network of Figure 1;

### Detailed description of preferred embodiments of the invention

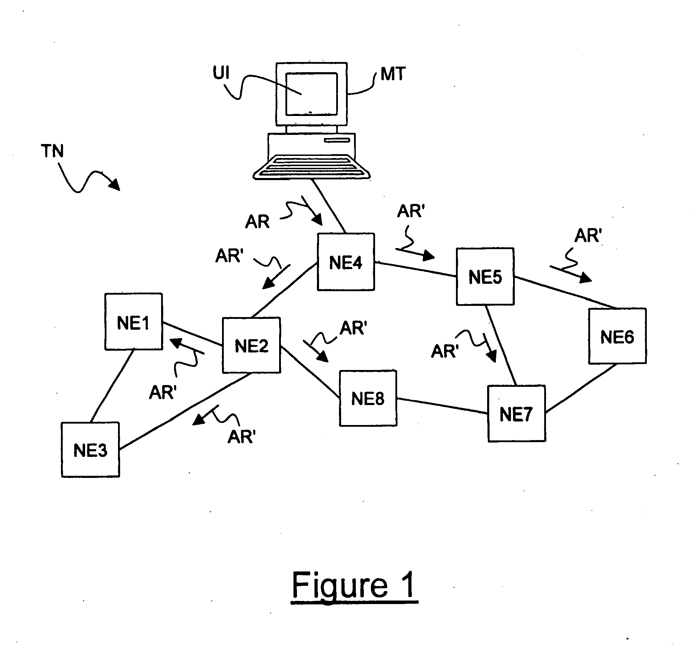

Figure 1 schematically shows a telecommunication network TN comprising eight network elements NE1, NE2, ..., NE8. This is merely exemplary, since the telecommunication network TN may comprise any number of network elements.

The network elements NE1, NE2, ..., NE8 are arranged according to a partially meshed topology, wherein: NE1, NE2 and NE3 are connected each other so as to form a first ring, NE2, NE4, NE5, NE6, NE7 and NE8 are connected each other so as to form a second ring, and NE5 and NE7 are connected each other. This topology is merely exemplary, since the network elements NE1, NE2, ..., NE8 may be arranged according to any topology (star, bus, ring, full mesh, etc.).

Further, preferably, a management terminal MT is connected to the network element NE4, which plays the role of a gateway. This is also merely exemplary, since the management terminal MT may be connected to any of the network elements NE1, NE2, ..., NE8. Herein after, for simplicity, the network element NE4 will be simply termed "gateway". The connection between the management terminal MT and the gateway NE4 may be either a logical connection or a physical connection.

Preferably, the management terminal MT is suitable to run a set of management applications, which are configured to perform respective management operations, and a set of supervision applications, whose role will be described in detail herein after. Preferably, the management applications and the supervision applications are written in a markup language, such as for instance SGML ("Generalized Markup Language") or XML ("Extensible Markup Language"). Further, preferably, the management terminal MT has a user interface UI, which preferably is a graphic interface. According to particularly preferred embodiments, the management terminal MT is configured to run a web browsing application (i.e. a "browser") which is suitable to generate the user interface UI as a web-like graphic interface, through which the operator responsible of managing the network TN may access the management and supervision applications.

Further, preferably, the gateway NE4 has a memory device (not shown in Figure 1) storing information relating to the topology of the telecommunication network TN (number of network elements, arrangement of network elements and connections among network elements). More preferably, each one of the network elements NE1, NE2, ..., NE8 has a respective memory device (not shown in Figure 1) storing the information relating to the topology of the telecommunication network TN. In this second case, in particular, if the telecommunication network TN is a packet-switched network, the information relating to the topology of the telecommunication network TN are exchanged among the network elements NE1, NE2, ..., NE8 by means of the routing protocol according to which the packets are routed within the telecommunication network TN.

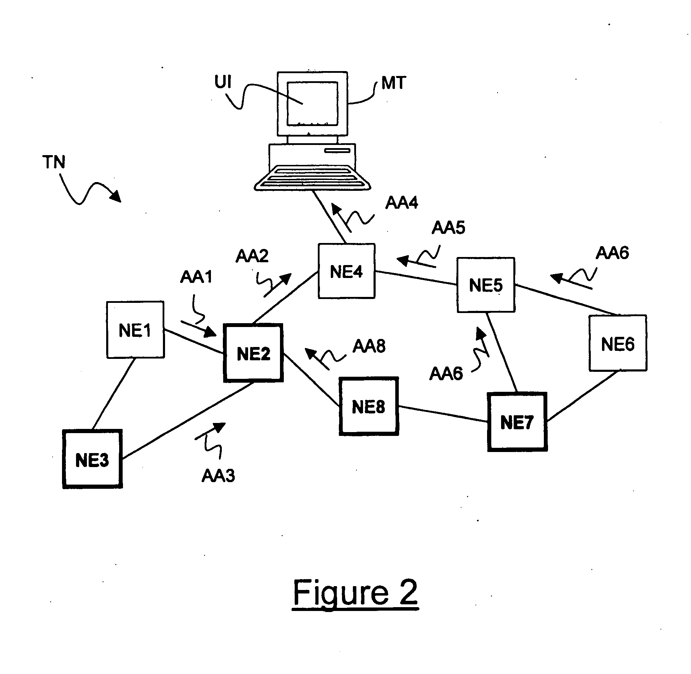

Herein after, by referring to Figures 1 and 2, the operation of allocating resources for supporting the execution of a management operation to be performed upon some of the network elements NE1, NE2, ..., NE8 will be described.

In this situation, the operator responsible of managing the network TN launches at the management terminal MT the execution of one of the supervision applications which, when executed, induces the management terminal MT to send a first allocation request message AR to the gateway NE4.

Preferably, the first allocation request message AR comprises at least one of the following fields:
- request identifier field, which preferably comprises an integer number assigned by the management terminal MT;
- management terminal identifier field, which comprises for instance the IP address of the management terminal MT;
- message type field, which preferably comprises a value (for instance, "1") indicating that the message AR is a resource allocation request message;
- requirement field: as it will be described in further detail herein after, this field advantageously allows to select, among the network elements NE1, NE2, ..., NE8, those ones upon which the management operation has to be performed, i.e. the ones that should allocate resources for executing the management operation. Preferably, the requirement field comprises at least one requirement. If a network element fulfills such at least one requirement, this means that it is one of the network elements upon which the management operation has to be performed. For instance, if the management operation for which the management terminal MT is requesting resource allocation is an operation involving the Ethernet ports of the network elements, the request field contains at least the requirement that the network element has at least one active Ethernet port;
- allocation field, which preferably comprises an information indicative of the type and amount of resources that each network element fulfilling the at least one requirement of the requirement field has to allocate for supporting the execution of the management operation. For instance, this field may specify the usage percentage of the processor, the memory amount or the bandwidth of a given port that the network element has to reserve for executing the management operation; and
- additional request field: this field advantageously allows the management terminal MT to request to the telecommunication network TN information relating to the outcome of the resource allocation operation, such as for instance: number of network elements that received the resource allocation request, number of network elements that allocated the resources, overall allocated resources, etc. Preferably, the additional requests contained in this field are written in XML language.

Preferably, the message AR is formatted according to the management protocol SNMP, TL1, etc. Alternatively, the message AR is sent by means of a Web Service.

When the gateway NE4 receives the message AR, it preferably calculates a first logical structure including the network elements NE1, NE2, ..., NE8. Preferably, this first logical structure is a tree structure wherein the gateway NE4 itself is the root. Optionally, the message AR may also include an information indicative of the criterion according to which the gateway NE4 has to calculate the first logical structure (for instance, span number minimization, bandwidth minimization, etc.). In this case, preferably, the gateway NE4 calculates the first logical structure according to such an information. By way of example, it is assumed that the first tree logical structure calculated by the gateway NE4 is as follows:
- root: NE4;
- children of the gateway NE4: NE2, NE5;
- children of NE2: NE1, NE3, NE8; children of NE5: NE6, NE7.

The gateway NE4 then generates a second allocation request message AR'. Preferably, the message AR' comprises, besides the above mentioned fields, a managed entity field, which preferably includes information describing the first logical structure calculated by the gateway NE4. Preferably, the message AR' is formatted according to the management protocol SNMP, TL1, etc. Alternatively, the message AR' is sent by means of a Web Service.

Then, preferably, the gateway NE4 sends the message AR' to the network elements NE2 and NE5, which are its children in the first tree logical structure. Then, preferably, the network element NE2, according to the content of the managed entity field, forwards the message AR' to the network elements NE1, NE2 and NE8, which are its children in the first tree logical structure. Further, preferably, the network element NE5, according to the content of the managed entity field, forwards the message AR' to the network elements NE6 and NE7, which are its children in the first tree logical structure. At the end of this operation, therefore, all the network elements NE1, NE2, ..., NE8 has received the message AR'.

Then, preferably, each network element NE1, NE2, ..., NE8 determines whether it fulfills the at least one requirement contained in the requirement field and, in the affirmative, it allocates the resources specified in the allocation field. By way of example, in the following it is assumed that only the network elements NE2, NE3, NE7 and NE8 fulfill the at least one requirement comprised in the requirement field. Such network elements are represented by bold lines in Figure 2.

In particular, preferably, when the network elements NE1, NE3 and NE8:
- have determined whether they fulfill the at least one requirement comprised in the requirement field of the message AR' and
- in the affirmative, they have allocated the resources specified in the allocation field of the message AR',
   they generate respective allocation answer messages AA1, AA3, AA8, which they send to the network element NE2 (i.e. their parent according to the first tree logical structure). Similarly, preferably, when the network elements NE6 and NE7:
- have determined whether they fulfill the at least one requirement comprised in the requirement field of the message AR'; and
- in the affirmative, they have allocated the resources specified in the allocation field of the message AR',
they generate respective allocation answer messages AA6 and AA7, which they send to the network element NE5 (i.e. their parent according to the first tree logical structure).

Preferably, each allocation answer message AA1, AA3, AA8, AA6 and AA7 comprises a request identifier field, a management terminal identifier field, a message type field and a managed entity field similar to those described above. Preferably, the content of the request identifier field and of the management terminal identifier field is the same as described above by referring to the messages AR and AR'. Otherwise, the message type field of each message AA1, AA3, AA8, AA6, AA7 preferably comprises a value (for instance, "11") indicating that the message AA1, AA3, AA8, AA6, AA7 is a message in response to a resource allocation request. Further, preferably, the managed entity field of each message AA1, AA3, AA8, AA6, AA7 preferably comprises the identifier of the management element which transmitted the message AA1, AA3, AA8, AA6, AA7. Further, preferably, each message AA1, AA3, AA8, AA6, AA7 comprises a response field which preferably comprises an information indicating whether the network element which is transmitting the message AA1, AA3, AA8, AA6, AA7 has allocated the requested resources and, in the affirmative, which resources it has allocated. Preferably, the messages AA1, AA3, AA8, AA6, AA7 are formatted according to the management protocol SNMP, TL1, etc. Alternatively, the messages AA1, AA3, AA8, AA6, AA7 are sent by means of Web Services.

Preferably, when the network element NE2:
- has determined whether it fulfills the at least one requirement comprised in the requirement field of the message AR',
- in the affirmative, it has allocated the resources specified in the allocation field AR', and
- it has received the messages AA1, AA3 and AA8 from the network elements NE1, NE3 and NE8,
it preferably generates an allocation response message AA2, which it forwards to the gateway NE4 (i.e. its parent in the first tree logical structure). Preferably, the message AA2 comprises the same fields of the messages AA1, AA3, AA8, AA6 and AA7 described above. In particular, the content of the request identifier field, of the management terminal identifier field and of the message type field is the same as described above by referring to the messages AA1, AA3, AA8, AA6, AA7. Otherwise, preferably, the managed entity field of the message AA2 preferably comprises information describing a first sub-tree formed by the network elements NE1, NE2, NE3 and NE8. Further, preferably, the response field of the message AA2 comprises an information indicating whether the network elements of the first sub-tree have the requested resources and, in the affirmative, which resources they have allocated.

Similarly, preferably, when the network element NE5:
- has determined whether it fulfills the at least one requirement comprised in the requirement field of the message AR',
- in the affirmative, it has allocated the resources specified in the allocation field of the message AR', and
- it has received the messages AA6 and AA7 from the network elements NE6 and NE7,
it preferably generates an allocation response message AA5, which it forwards to the gateway NE4 (i.e. its parent in the first tree logical structure). Preferably, also the message AA5 comprises the same fields of the messages AA1, AA3, AA8, AA6, AA7 described above. In particular, the content of the request identifier field, of the management terminal identifier field and of the message type field are the same as described above by referring to the messages AA1, AA3, AA8, AA6 and AA7. Otherwise, preferably, the managed entity field of the message AA5 comprises information describing a second sub-tree formed by the network elements NE5, NE6 and NE7. Further, preferably, the response field of the message AA5 comprises an information indicating whether the network elements of the second sub-tree have allocated the requested resources and, in the affirmative, which resources they have allocated.

Preferably, when the gateway NE4:
- has determined whether it fulfills the at least one requirement comprised in the requirement field of the message AR,
- in the affirmative, it has allocated the resources specified in the allocation field of the message AR, and
- it has received the messages AA2 and AA5 from the network elements NE2 and NE5,
it preferably processes the content of the messages AA2 and AA5, and it then identifies the network elements (in this example, NE2, NE3, NE8 and NE7) which have allocated the resources for supporting the execution of the management operation.

Then, preferably, the gateway NE4 uses the information relating to the topology of the telecommunication network TN (which it stores in its memory device) for calculating a second logical structure including the network elements NE2, NE3, NE8 and NE7. Preferably, also the second logical structure is a tree logical structure. Preferably, if the gateway fulfils the at least one requirement included in the request field of the allocation request AR, the gateway NE4 is the root of this second tree logical structure. Otherwise, if (as in this example) the gateway NE4 does not fulfil the at least one requirement, it preferably selects among the identified network elements NE2, NE3, NE8 and NE7 a network elements which plays to role of the root of the second tree logical structure. Preferably, if the message AR includes an information indicative of the criterion according to which the gateway NE4 has to calculate the second logical structure (for instance, minimization of the number of spans, minimization of the used bandwidth, etc.), the gateway NE4 preferably calculates the second logical structure according to this information. For instance, in the exemplary network TN, the gateway NE4 selects the network element NE2 as the root of the second tree logical structure. By way of example, it is assumed that the second logical structure according to which the gateway NE4 arranges the identified network elements NE2, NE3, NE8 and NE7 is as follows:
- root: NE2;
- children of NE2: NE3, NE8;
- children of NE8: NE7.

The gateway NE4 then generates an allocation answer message AA4, which it sends to the management terminal MT. Preferably, also the message AA4 comprises the same fields of the messages AA1, AA3, AA8, AA6 and AA7 described above. In particular, the content of the request identifier field, the management terminal identifier field and the message type field are the same as described above by referring to the messages AA1, AA3, AA8, AA6 and AA7. On the contrary, preferably, the managed entity field of the message AA4 preferably comprises information describing the second logical structure calculated by the gateway NE4. Further, preferably, the response field of the message AA4 comprises an information indicating whether the network elements of the second logical structure have allocated the requested resources and, in the affirmative, which resources have been allocated.

Then, upon reception of the message AA4, the management terminal MT preferably begins the execution of the management application performing the requested management operation, which therefore will be executed only upon the identified network elements NE2, NE3, NE8 and NE7 that form the second logical structure. In particular, possible information that the management terminal MT will have to transmit to the network elements NE2, NE3, NE8 and NE7 during the execution of the management operation is preferably distributed through the second tree logical structure. Similarly, possible information that the management terminal MT will have to collect from the network elements NE2, NE3, NE8 and NE7 during the execution of the management operation will be collected through the second tree logical structure.

Preferably, during the execution of the management operation, the gateway NE4 is responsible of forwarding the information transmitted by the management terminal MT and addressed to the network element NE2 and vice versa. Further, preferably, during the execution of the management operation, the gateway NE4 is responsible of monitoring possible updates of the topology of the telecommunication network TN (for instance, addition or removal of a network element, or updating a network element, etc.) and to modify the second logical structure according to such updates.

Accordingly, advantageously, the network elements upon which a given management operation has to be performed (and which then have to allocate resources for supporting this operation) are automatically identified. Indeed, advantageously, when an operator wishes to perform a given management operation, he only has to launch through the management terminal MT the execution of the supervision application, which sends to the gateway NE4 the allocation request message AR. After, the telecommunication network itself (i.e. the network elements) processes the content of the message AR, since each network element is autonomously able to determine whether the request contained in the message AR or AR' is addressed to it. Then, the operator does not have to known a priori the network elements upon which the management operation has to be performed, since the telecommunication network itself determines such an information and communicates it to the operator through the allocation answer messages.

Further, advantageously, the management terminal MT has to allocate a considerably lower amount of resources in comparison to that required by the known supervision operation described in the introduction. Indeed, advantageously, the management terminal MT does not have to connect with each network element for requesting allocation of the resources required for supporting the execution of the management operation. On the contrary, the management terminal MT only has to connect with the gateway, which gateway, by using the information relating to the telecommunication network topology, calculates the first tree logical structure, and then propagates the request of the management terminal MT to the other network elements and collects their answers in an aggregated form by using the first tree logical structure. Accordingly, advantageously, the management terminal MT, differently from a conventional NMS, may be a terminal with very limited computation resources, and substantially ignoring information relating to the telecommunication network topology.

Further, advantageously, possible congestions of the gateway NE4 are avoided, since the only connections that the gateway NE4 has to support are the connection with the management terminal MT and the connections with its children of the first tree logical structure.

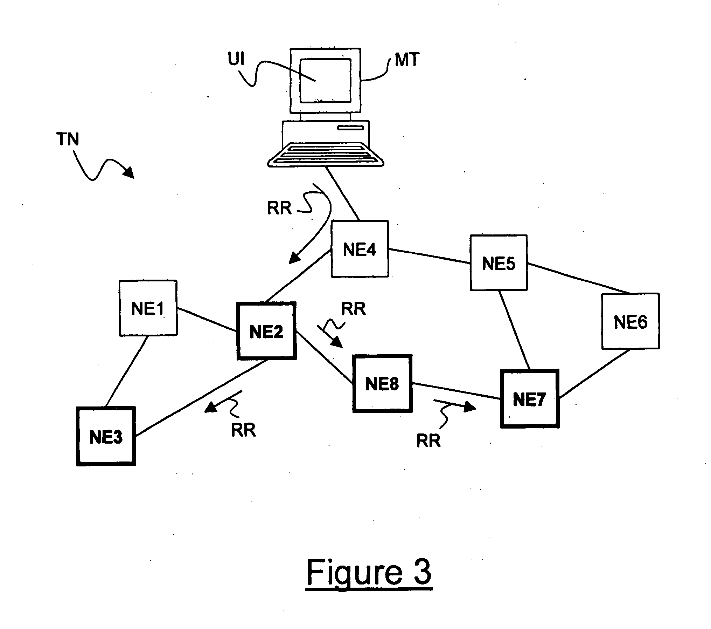

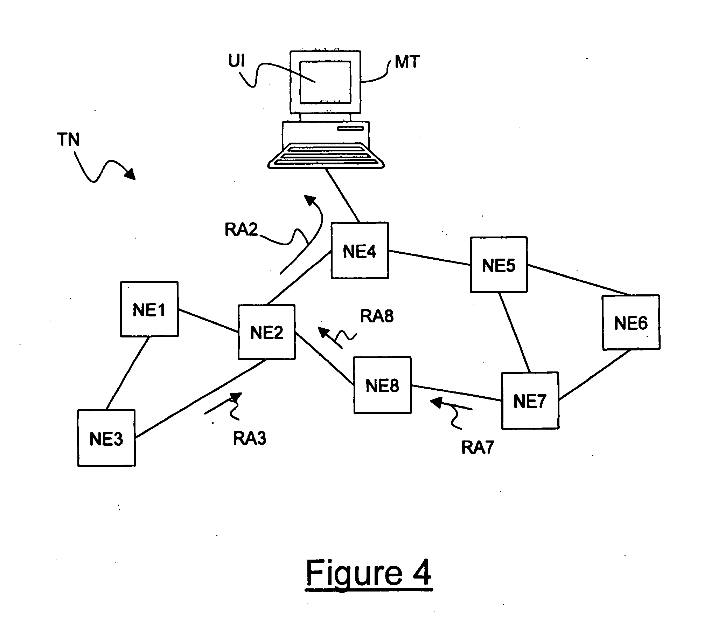

Herein after, by referring to Figures 3 and 4, the operation if releasing the resources allocated at the network elements NE2, NE3, NE8 and NE7 will be described in detail. Such a release operation is performed e.g. at the end of the execution of the management operation.

By referring to Figure 3, the release of the allocated resources is started by a release request message RR transmitted by the management terminal MT to the network element NE2 through the gateway NE4. Preferably, the release request message RR comprises a request identifier field, a management terminal identifier field, a message type field, a managed entity field and an additional request field similar to those described above. Preferably, the content of the various fields is as follows:
- request identifier field: it preferably comprises a value which is different from the value comprised in the above described messages AR, AR', AA1, ..., AA8;
- management terminal identifier field: this field may comprise the IP address of the management terminal MT;
- message type field: this field preferably comprises a value (namely, "2") indicating that the message RR is a request for releasing the resources;
- managed entity field: it preferably comprises information describing the second logical structure calculated by the gateway NE4; and
- additional request field: this field advantageously allows the management terminal MT to request to the telecommunication network TN information relating to the outcome of the resource release operation, such as for instance: the network element status, possible alarms, etc. Preferably, the additional requests contained in this field are written in the XML language.

The message RR may be manually generated by the operator, by selecting a suitable graphical object of the interface UI. Alternatively, the message RR may be automatically generated at the end of the execution of the management operation. Preferably, the message RR is formatted according to the management protocol SNMP, TL1, etc. Alternatively, the message RR is sent by means of a Web Service.

When the network element NE2 receives the message RR, according to the information included in the managed entity field, it forwards it to the network elements NE3 and NE8 (i.e. its children in the second tree logical structure). When the network element NE8 receives the message RR, according to the information included in the managed entity field, it forwards it to the network element NE7 (i.e. its child in the second tree logical structure). At the end of this operation, all the network elements NE2, NE3, NE8, NE7 which are part of the second tree logical structure have then received the message RR.

Then, upon reception of the message RR, each of the network elements NE2, NE3, NE8, NE7 releases the resources which were previously allocated for supporting the execution of the management operation.

Further, by referring to Figure 4, when the network element NE7 has released the resources, it generates a release acknowledge message RA7, which it sends to the network element NE8 (i.e. its parent in the second tree logical structure). Preferably, the release acknowledge message RA7 comprises a request identifier field, a management terminal identifier field, a message type field and a managed entity field similar to those described above. Preferably, the content of the request identifier field and of the management terminal identifier field are the same as described above by referring to the message RR. Otherwise, the massage type field of the message RA7 preferably comprises a value (e.g. "12") indicating that the message RA7 is a message for answering to a request of releasing resources. Further, preferably, the managed entity field of the message RA7 preferably comprises the identifier of the network element NE7 which has transmitted the message RA7. Further, preferably, the message RA7 preferably comprises a response field which preferably comprises an information indicating whether the network element NE7 has released the resources. Preferably, this field also includes the information requested by the management terminal MT in the additional request field of the message RR.

Further, when the network element NE8 has released the resources and has received the message RA7 from the network element NE7, it preferably generates a release acknowledge message RA8, which it forwards to the gateway NE2 (i.e. its parent in the second tree logical structure). Preferably, the release acknowledge message RA8 comprises the same fields as the message RA7. Preferably, the content of the request identifier field, of the management terminal identifier field and of the message type field are the same as described above by referring to the message RA7. On the contrary, preferably, the managed entity field of the message RA8 preferably comprises information describing a third sub-tree formed by the network elements NE7 and NE8. Further, preferably, the response field of the message RA8 preferably comprises an information indicating whether the network elements of the third sub-tree has released the resources. Preferably, this field also includes the information requested by the management terminal MT in the additional request field of the message RR.

Similarly, preferably, when the network element NE3 has released the resources, it generates a release acknowledge message RA3, which it sends to the network element NE2 (i.e. its parent in the second tree logical structure). The content and format of the message RA3 are equal to those of the above described message RA7, therefore a detailed description will not be repeated.

Preferably, when the network element NE2 has released the resources and has received the messages RA3 and RA7 from the network elements NE3 and NE7, respectively, it preferably generates a release acknowledge message RA2, which it forwards to the management terminal MT through the gateway NE4. Preferably, the message RA2 comprises the same fields as the messages RA3, RA7 and RA8. Preferably, the content of the request identifier field, the management terminal field and the message type field are the same as described above by referring to the messages RA3, RA7 and RA8. Otherwise, preferably, the managed entity field of the message RA2 preferably comprises information describing the second logical structure. Further, preferably, the response field of the message RA2 preferably comprises an information indicating whether the network elements of the second logical structure have released the resources. Preferably, this field includes also the information requested by the management terminal MT in the additional request field of the message RR.

Accordingly, advantageously, also the operation of releasing the resources is automatically performed, without requiring that the operator knows the network elements that allocated the resources for a given management operation. Further, advantageously, also the release operation requires a very small amount of resources at the management terminal MT, since the management terminal only has to generate and transmit the message RR to the network element which plays to role of the root of the second tree logical structure. Subsequently, such a message is autonomously processed by the network, without requiring any further processing by the management terminal MT. Besides, also in this case, possible congestions of the gateway are advantageously avoided, since also during the release operation the gateway NE4 only has to forward the message RR from the management terminal MT to the network element playing the role of the root of the second tree logical structure, and to forward the message RA2 in the opposite direction.

Preferably, the messages RA2, RA3, RA7, RA8 are formatted according to the management protocol SNMP, TL1, etc. Alternatively, the messages RA2, RA3, RA7, RA8 may be sent by means of Web Services.

## Claims

1. A method of allocating resources for performing a management operation upon network elements (NE2, NE3, NE7, NE8) of a telecommunication network (TN), comprising the following steps:
a) sending a resource allocation request (AR) to a first network element (NE4) of said telecommunication network (TN);
b) at said first network element (NE4), calculating a first logical structure comprising a plurality of network elements (NE1, NE2, ..., NE8) of said telecommunication network (TN), said plurality of network elements (NE1, NE2, ..., NE8) comprising said first network element (NE4);
c) distributing said allocation request (AR, AR') from said first network element (NE4) to remaining network elements of said plurality of network elements (NE1, NE2, ..., NE8) according to said first logical structure; and
d) in at least one of said remaining network elements of said plurality of network elements (NE1, NE2, ..., NE8), determining whether allocating resources according to a content of said allocation request (AR, AR').

2. The method according to claim 1, further comprising the following steps:
e) in at least one of said remaining network elements (NE1, NE2, ..., NE8), transmitting to said first network element (NE4) an allocation answer message (AA1, AA2, ..., AA8) indicating whether said at least one of said remaining network elements (AA1, AA2, ..., AA8) has allocated said resources;
f) in said first network element (NE4), determining whether said at least one of said remaining network elements (AA1, AA2, ..., AA8) has allocated said resources according to said allocation answer message (AA1, AA2, ..., AA8); and
g) in the affirmative, in said first network element (NE4), calculating a second logical structure including said at least one of said remaining network elements (NE1, NE2,..., NE8).

3. The method according to claim 1 or 2, wherein said step a) comprises a step of sending, in said resource allocation request (AR), a requirement and wherein said step d) comprises a step of determining whether said at least one of said plurality of network elements (NE1, NE2, ..., NE8) fulfills said requirement and, in the affirmative, determining to allocate said resources.

4. The method according to any of the preceding claims, wherein said step a) comprises a step of sending, in said resource allocation request (AR), an information indicative of a type and an amount of resources that said at least one of said plurality of network elements (NE1, NE2, ..., NE8) has to allocate, if during said step d) said at least one of said plurality of network elements (NE1, NE2, ..., NE8) determines to allocate said resources.

5. The method according to any of the preceding claims, wherein said step a) comprises a step of sending, in said resource allocation request (AR), an information indicative of a criterion according to which said first logical structure has to be calculated, and wherein said step b) comprises a step of calculating said first logical structure according to said criterion.

6. A telecommunication system (TN) comprising a plurality of network elements (NE1, NE2, ..., NE8) and a management terminal (MT) cooperating with a first network element (NE4) of said plurality of network elements (NE1, NE2, ..., NE8), wherein:
- said management terminal (MT) is configured to send to said first network element (NE4) an allocation request (AR) for requesting to allocate resources for performing a management operation;
- said first network element (NE4) is configured to calculate a first logical structure comprising said plurality of network elements (NE1, NE2, ..., NE8), and for distributing said allocation request (AR, AR') to remaining network elements of said plurality of network elements (NE1, NE2, ..., NE8) according to said first logical structure; and
- at least one of said remaining network elements of said plurality of network elements (NE1, NE2, ..., NE8) is configured to determine whether allocating said resources according to the content of the allocation request (AR, AR').

7. The telecommunication system (TN) according to claim 6, wherein:
- said at least one of said remaining network elements of said plurality of network elements (NE1, NE2, ..., NE8) is configured to transmit to said first network element (NE4) an allocation answer message (AA1, AA2, ..., AA8) indicating whether said at least one of said remaining network elements (AA1, AA2, ..., AA8) has allocated said resources; and
- said first network element (NE4) is further configured to determine whether said at least one of said remaining network elements (NE1, NE2, ..., NE8) has allocated said resources according to said allocation answer message (AA1, AA2, ..., AAB) and, in the affirmative, to calculate a second logical structure including said at least one of said remaining network elements (NE1, NE2, ..., NE8).

8. The telecommunication system (TN) according to claim 6 or 7, wherein:
- said management terminal (TN) is further configured to send, in said resource allocation request (AR), a requirement; and
- said at least one of said plurality of network elements (NE1, NE2, ..., NE8) is further configured to determine whether it fulfils said requirement and, in the affirmative, to determine to allocate said resources.

9. The telecommunication system (TN) according to any of claims 6 to 8, wherein said management terminal (MT) is further configured to send, in said resource allocation request (AR), an information indicative of a type and an amount of resources that said at least one of said plurality of network elements (NE1, NE2, ..., NE8) has to allocate, in case said at least one of said plurality of network elements (NE1, NE2, ..., NE8) determines to allocate said resources.

10. The telecommunication system (TN) according to any of the claims 6 to 9, wherein:
- said management terminal (MT) is further configured to send, in said resource allocation request (AR), an information indicative of a criterion according to which said first logical structure has to be calculated; and
- said first network element (NE4) is configured to calculate said first logical structure according to said criterion.

## Patentansprüche

1. Ein Verfahren zur Zuweisung von Ressourcen zum Ausführen eines Verwaltungsvorgangs auf Netzwerkelementen (NE2, NE3, NE7, NE8) in einem Telekommunikationsnetzwerk (TN), die folgenden Schritte umfassend:
(a) Senden einer Ressourcenzuweisungsanforderung (AR) an ein erstes Netzwerkelement (NE4) des besagten Telekommunikationsnetzwerks (TN);
(b) am ersten Netzwerkelement (NE4), Berechnen einer ersten logischen Struktur mit einer Vielzahl von Netzwerkelementen (NE1, NE2, ..., NE8) des besagten Telekommunikationsnetzwerks (TN), wobei die besagte Vielzahl von Netzwerkelementen (NE1, NE2, ..., NE8) das besagte erste Netzwerkelement umfasst (NE4);
(c) Verteilen der besagten Zuweisungsanforderung (AR, AR') vom besagten ersten Netzwerkelement (NE4) an die übrigen Netzwerkelemente der besagten Vielzahl von Netzwerkelementen (NE1, NE2, ..., NE8) gemäß der besagten ersten logischen Struktur; und
(d) in mindestens einem der besagten übrigen Netzwerkelemente der besagten Vielzahl von Netzwerkelementen (NE1, NE2, ..., NE8), Entscheiden, ob Ressourcen gemäß einem Inhalt der besagten Zuweisungsanforderung (AR, AR') zugewiesen werden.

2. Das Verfahren nach Anspruch 1, weiterhin die folgenden Schritte umfassend:
(e) In mindestens einem der besagten übrigen Netzwerkelemente (NE1, NE2, ..., NE8), Übermitteln einer Zuweisungsantwortnachricht (AA1, AA2, ..., AA8), welche angibt, ob das besagte mindestens eine der übrigen Netzwerkelemente (AA1, AA2, ..., AA8) die besagten Ressourcen zugewiesen hat, an das besagte erste Netzwerkelement (NE4);
(f) im besagten ersten Netzwerkelement (NE4), Ermitteln, ob das besagte mindestens eine der besagten übrigen Netzwerkelemente (AA1, AA2, ..., AA8) die besagten Ressourcen gemäß der besagten Zuweisungsantwortnachricht (AA1, AA2, ..., AA8) zugewiesen hat; und
(g) wenn dies der Fall ist. Berechnen, im besagten ersten Netzwerkelement (NE4), einer zweiten logischen Struktur, welche das mindestens eine der besagten übrigen Netzwerkelemente (NE1, NE2, ..., NE8) umfasst.

3. Das Verfahren nach Anspruch 1 oder 2, wobei der besagte Schritt a) einen Schritt des Sendens, in der besagten Ressourcenzuweisungsanforderung (AR), einer Bedingung umfasst, und wobei der besagte Schritt d) einen Schritt des Ermittelns, ob das besagte mindestens eine der besagten Vielzahl von Netzwerkelementen (NE1, NE2, ..., NE8) die besagte Bedingung erfüllt, und, wenn dies der Fall ist, das Entscheiden der Zuweisung der besagten Ressourcen umfasst.

4. Das Verfahren nach einem beliebigen der vorstehenden Ansprüche, wobei der besagte Schritt a) einen Schritt des Sendens, in der besagten Ressourcenzuweisungsanforderung (AR), einer Information, welche einen Typ und eine Menge der Ressourcen angibt, die von dem besagten mindestens einen der besagten Vielzahl von Netzwerkelementen (NE1, NE2, ..., NE8) zuzuweisen sind, wenn das besagte mindestens eine der besagten Vielzahl von Netzwerkelementen (NE1, NE2, ..., NE8) in Schritt d) entscheidet, die besagten Ressourcen zuzuweisen, umfasst.

5. Das Verfahren nach einem beliebigen der vorstehenden Ansprüche, wobei der besagte Schritt a) einen Schritt des Sendens, in der besagten Ressourcenzuweisungsanforderung (AR), einer Information, welche ein Kriterium, gemäß welchem die besagte erste logische Struktur zu berechnen ist, angibt, umfasst, und wobei der besagte Schritt b) einen Schritt des Berechnens der besagten logischen Struktur gemäß dem besagten Kriterium umfasst.

6. Ein Telekommunikationssystem (TN) mit einer Vielzahl von Netzwerkelementen (NE1, NE2, ..., NE8) und einem Verwaltungsendgerät (MT), welches mit einem ersten Netzwerkelement (NE4) der besagten Vielzahl von Netzwerkelementen (NE1, NE2, ..., NE8) zusammenarbeitet, wobei:
- Das besagte Verwaltungsendgerät (MT) konfiguriert ist, um dem ersten Netzwerkelement (NE4) eine Zuweisungsanforderung (AR) zu senden, um die Zuweisung von Ressourcen zum Ausführen eines Verwaltungsvorgangs anzufordern;
- das besagte erste Netzwerkelement (NE4) konfiguriert ist, um eine erste logische Struktur, welche die besagte Vielzahl von Netzwerkelementen (NE1, NE2, ..., NE8) umfasst, zu berechnen, und um die besagte Zuweisungsanforderung (AR, AR') an die übrigen Netzwerkelemente der besagten Vielzahl von Netzwerkelementen (NE1, NE2, ..., NE8) gemäß der besagten ersten logischen Struktur zu verteilen; und
- mindestens eines der besagten übrigen Netzwerkelemente der besagten Vielzahl von Netzwerkelementen (NE1, NE2, ..., NE8) konfiguriert ist, um zu entscheiden, ob die besagten Ressourcen gemäß dem Inhalt der Zuweisungsanforderung (AR, AR') zugewiesen werden.

7. Das Telekommunikationssystem (TN) nach Anspruch 6, wobei:
- Das besagte mindestens eine der besagten übrigen Netzwerkelemente der besagten Vielzahl von Netzwerkelementen (NE1, NE2, ..., NE8) konfiguriert ist, um eine Zuweisungsantwortnachricht (AA1, AA2, ..., AA8), welche angibt, ob das besagte mindestens eine der besagten übrigen Netzwarkelemente (AA1, AA2, ..., AA8) die besagten Ressourcen zugewiesen hat, an das besagte erste Netzwerkelement (NE4) zu übermitteln; und
- das besagte erste Netzwerkelement (NE4) weiterhin konfiguriert ist, um zu ermitteln, ob das besagte mindestens eine der besagten übrigen Netzwerkelemente (NE1, NE2, ..., NE8) die besagten Ressourcen gemäß der besagten Zuweisungsantwortnachricht (AA1, AA2, ..., AA8) zugewiesen hat, und, wenn dies der Fall ist, eine zweite logische Struktur, welche das besagte mindestens eine der besagten übrigen Netzwerkelemente (NE1, NE2, ..., NE8) umfasst, zu berechnen.

8. Das Telekommunikationssystem (TN) nach Anspruch 6 oder 7, wobei:
- Das besagte Verwaltungsendgerät (TN) weiterhin konfiguriert ist, um in der besagten Ressourcenzuweisungsanforderung (AR) eine Bedingung zu senden; und
- das besagte mindestens eine der besagten Vielzahl von Netzwerkelementen (NE1, NE2, ..., NE8) weiterhin konfiguriert ist, um zu ermitteln, ob es die besagte Bedingung erfüllt, und, wenn dies der Fall ist, das Zuweisen der besagten Ressourcen zu entscheiden.

9. Das Telekommunikationssystem (TN) nach einem beliebigen der Ansprüche 6 bis 8, wobei das besagte Verwaltungsendgerät (MT) weiterhin konfiguriert ist, um in der besagten Ressourcenzuweisungsanforderung (AR) eine Information zu einem Typ und einer Menge der Ressourcen, welche von dem besagten mindestens einen der besagten Vielzahl von Netzwerkelementen (NE1, NE2, ..., NE8) zuzuweisen sind, zu senden, wenn das besagte mindestens eine der besagten Vielzahl von Netzwerkelementen (NE1, NE2, ..., NE8) entscheidet, die besagten Ressourcen zuzuweisen.

10. Das Telekommunikationssystem (TN) nach einem beliebigen der Ansprüche 6 bis 9, wobei:
- Das besagte Vervvaltungsendgerät (MT) weiterhin konfiguriert ist, um in der besagten Ressourcenzuweisungsanforderung (AR) eine Information zu einem ein Kriterium, nach welchem die besagte erste logische Struktur zu berechnen ist, zu senden; und
- das besagte erste Netzwerkelement (NE4) konfiguriert ist, um die besagte erste logische Struktur gemäß dem besagten Kriterium zu berechnen.

## Revendications

1. Procédé d'allocation des ressources pour effectuer une opération de gestion sur des éléments de réseau (NE2, NE3, NE7, NE8) d'un réseau de télécommunication (TN), comprenant les étapes suivantes :
(a) envoi d'une demande d'allocation de ressource (AR) à un premier élément de réseau (NE4) dudit réseau de télécommunication (TN) ;
(b) sur ledit premier élément de réseau (NE4), calcul d'une première structure logique comprenant une pluralité d'éléments de réseau (NE1, NE2, ..., NE8) dudit réseau de télécommunication (TN), ladite pluralité d'éléments de réseau (NE1, NE2, ..., NE8) comprenant ledit premier élément de réseau (NE4) ;
(c) distribution de ladite demande d'allocation (AR, AR') dudit premier élément de réseau (NE4) aux éléments de réseau restants de ladite pluralité d'éléments de réseau (NE1, NE2, ..., NE8) conformément à ladite première structure logique ; et
(d) dans au moins l'un desdits éléments de réseau restants de ladite pluralité d'éléments de réseau (NE1, NE2, ..., NE8), détermination de l'allocation ou non des ressources conformément à un contenu de ladite demande d'allocation (AR, AR').

2. Procédé selon la revendication 1, comprenant en outre les étapes suivantes :
(e) dans au moins l'un desdits éléments de réseau restants (NE1, NE2, ..., NE8), transmission audit premier élément de réseau (NE4) d'un message de réponse d'allocation (AA1, AA2, ..., AA8) indiquant si ledit au moins un desdits éléments de réseau restants (AA1, AA2, ..., AA8) a alloué lesdites ressources ;
(f) dans ledit premier élément de réseau (NE4), détermination de l'allocation ou non desdites ressources par ledit au moins un desdits éléments de réseau restants (AA1, AA2, ..., AA8) conformément audit message de réponse d'allocation (AA1, AA2, ..., AA8); et
(g) dans l'affirmative, dans ledit premier élément de réseau (NE4), calcul d'une deuxième structure logique incluant ledit au moins un desdits éléments de réseau restants (NE1, NE2, ..., NE8).

3. Procédé selon la revendication 1 ou 2, selon lequel l'étape a) comprend une étape d'envoi, dans ladite demande d'allocation de ressource (AR), d'une exigence et selon lequel ladite étape d) comprend une étape de détermination de la satisfaction ou non à cette exigence par ledit au moins un parmi ladite pluralité d'éléments de réseau (NE1, NE2, ..., NE8) et, dans l'affirmative, détermination de l'allocation desdites ressources.

4. Procédé selon l'une quelconque des revendications précédentes, selon lequel l'étape a) comprend une étape d'envoi, dans ladite demande d'allocation de ressource (AR), d'une information indiquant un type et une quantité de ressources qui doivent être allouées par ledit au moins un parmi ladite pluralité d'éléments de réseau (NE1, NE2, ..., NE8) si, pendant ladite étape d), ledit au moins un parmi ladite pluralité d'éléments de réseau (NE1, NE2, ..., NE8) détermine d'allouer lesdites ressources.

5. Procédé selon l'une quelconque des revendications précédentes, selon lequel l'étape a) comprend une étape d'envoi, dans ladite demande d'allocation de ressource (AR), d'une information indiquant un critère selon lequel ladite première structure logique doit être calculée et selon lequel ladite étape b) comprend une étape de calcul de ladite première structure logique conformément audit critère.

6. Système de télécommunication (TN) comprenant une pluralité d'éléments de réseau (NE1, NE2, ..., NE8) et un terminal de gestion (MT) coopérant avec un premier élément de réseau (NE4) de ladite pluralité d'éléments de réseau (NE1, NE2, ..., NE8), selon lequel :
- ledit terminal de gestion (MT) est configuré pour envoyer audit premier élément de réseau (NE4) une demande d'allocation (AR) pour demander l'allocation de ressources en vue d'effectuer une opération de gestion ;
- ledit premier élément de réseau (NE4) est configuré pour calculer une première structure logique comprenant ladite pluralité d'éléments de réseau (NE1, NE2, ..., NE8) et pour distribuer ladite demande d'allocation (AR, AR') aux éléments de réseau restants de ladite pluralité d'éléments de réseau (NE1, NE2, ..., NE8) conformément à ladite première structure logique ; et
- au moins l'un desdits éléments de réseau restants de ladite pluralité d'éléments de réseau (NE1, NE2, ..., NE8) est configuré pour déterminer l'allocation ou non desdites ressources conformément au contenu de la demande d'allocation (AR, AR').

7. Système de télécommunication (TN) selon la revendication 6, selon lequel :
- ledit au moins un desdits éléments de réseau restants de ladite pluralité d'éléments de réseau (NE1, NE2, .... NE8) est configuré pour transmettre audit premier élément de réseau (NE4) un message de réponse d'allocation (AA1, AA2, ..., AA8) indiquant si ledit au moins un desdits éléments de réseau restants (AA1, AA2, ..., AA8) a alloué lesdites ressources ; et
- ledit premier élément de réseau (NE4) est en outre configuré pour déterminer si ledit au moins un desdits éléments de réseau restants (NE1, NE2, ..., NE8) a alloué ou non lesdites ressources conformément audit message de réponse d'allocation (AA1, AA2, ..., AA8) et, dans l'affirmative, pour calculer une deuxième structure logique incluant ledit au moins un desdits éléments de réseau restants (NE1, NE2, ..., NE8).

8. Système de télécommunication (TN) selon la revendication 6 ou 7, selon lequel :
- ledit terminal de gestion (TN) est en plus configuré pour envoyer, dans ladite demande d'allocation de ressource (AR), une exigence ; et
- ledit au moins un parmi ladite pluralité d'éléments de réseau (NE1, NE2, ..., NE8) est en outre configuré pour déterminer s'il satisfait ou non à ladite exigence et, dans l'affirmative, pour déterminer d'allouer lesdites ressources.

9. Système de télécommunication (TN) selon l'une quelconque des revendications 6 à 8, selon lequel ledit terminal de gestion (MT) est en outre configuré pour envoyer, dans ladite demande d'allocation de ressource (AR), une information indiquant un type et une quantité de ressources qui doivent être allouées par ledit au moins un parmi ladite pluralité d'éléments de réseau (NE1, NE2, ..., NE8) dans le cas où ledit au moins un parmi ladite pluralité d'éléments de réseau (NE1, NE2, ..., NE8) détermine d'allouer lesdites ressources.

10. Système de télécommunication (TN) selon l'une quelconque des revendications 6 à 9, selon lequel :
- ledit terminal de gestion (MT) est en plus configuré pour envoyer, dans ladite demande d'allocation de ressource (AR), une information indiquant un critère selon lequel il faut calculer ladite première structure logique ; et
- ledit premier élément de réseau (NE4) est configuré pour calculer ladite première structure logique conformément audit critère.
